Europäisches Patentamt

European Patent Office

Office européen des brevets

(19)

(11) Veröffentlichungsnummer: **0 308 396 B1**

## (12) EUROPÄISCHE PATENTSCHRIFT

(45) Veröffentlichungstag der Patentschrift: **15.01.92**

(51) Int. Cl.⁵: **H02K 49/04**

(21) Anmeldenummer: **85903974.5**

(22) Anmeldetag: **31.07.85**

(86) Internationale Anmeldenummer:
**PCT/AT85/00022**

(87) Internationale Veröffentlichungsnummer:
**WO 87/00990 (12.02.87 87/04)**

(54) **WIRBELSTROMBREMSE FÜR KRAFTFAHRZEUGE.**

(43) Veröffentlichungstag der Anmeldung:
**29.03.89 Patentblatt 89/13**

(45) Bekanntmachung des Hinweises auf die
Patenterteilung:
**15.01.92 Patentblatt 92/03**

(84) Benannte Vertragsstaaten:
**AT BE CH DE FR GB IT LI LU NL SE**

(56) Entgegenhaltungen:
**DE-A- 1 939 503**
**DE-A- 3 228 275**
**GB-A- 1 433 748**

**Patents Abstracts of Japan, Band 9, Nr. 27
(E-294)(1750), 6. Februar 1985; & JP-
A-59172947**

(73) Patentinhaber: **Berger, Johann**
**Innsbrucker Strasse 43**
**A-6300 Wörgl(AT)**

(72) Erfinder: **SEIWALD, Andreas**
**Anichstrasse 5**
**A-6300 Wörgl(AT)**

(74) Vertreter: **Torggler, Paul, Dr.**
**Wilhelm-Greil-Strasse 16**
**A-6020 Innsbruck(AT)**

EP 0 308 396 B1

## Beschreibung

Die Erfindung betrifft eine Wirbelstrombremse für Kraftfahrzeuge zum Einbau in die Antriebswelle, mit einem Gehäuse als Träger peripher angeordneter Magnetspulen, mit einer in einer Gehäusenabe gelagerten, und mit der Antriebswelle kuppelbaren Bremswelle, und mit einem auf der Bremswelle befestigten Rotor, wobei die Gehäusenabe zwei axial distanzierte Wellenlager aufweist.

Eine derartige Wirbelstrombremse ist beispielsweise der DE-PS 955.969 zu entnehmen. Insbesondere für Schwerfahrzeuge stellt eine Wirbelstrombremse eine wirkungsvolle, unabhängige Ergänzung des übrigen Bremssystems dar, und wird, angebaut an das Schaltgetriebe oder als Teil der Kardanwelle, in den Antrieb eingesetzt. Werden die Magnetspulen erregt, so bauen sie Magnetfelder auf, die in dem sich drehenden Rotor Wirbelstörme induzieren. Die wiederum von den Wirbelströmen aufgebauten Magnetfelder wirken mit denen der Magnetspulen zusammen und bremsen den Rotor und damit die Antriebswelle.

In den letzten Jahren ist es gelungen, in der Praxis taugliche Blockierschutzeinrichtungen für die einzelnen Räder der Kraftfahrzeuge unabhängig in der Weise zu steuern, daß sie auch bei stark verminderter Bodenhaftung auf Eis oder Schnee nicht blockieren können. Die Bremswege werden dadurch wesentlich verkürzt und die Verkehrssicherheit erhöht. Weist nun ein derartiges mit Blockierschutzeinrichtungen ausgestattetes Fahrzeug eine Wirbelstrombremse auf, so werden in den Fällen der verringerten Bodenhaftung die Blockierschutzeinrichtungen der angetriebenen Räder sinnlos, wenn durch die Wirbelstrombremse deren Antrieb blockiert wird, da ja keine Rückkoppelung zwischen dem Radbremssystem und der eine zusätzliche, unabhängige Bremse bildenden Wirbelstrombremse gegeben ist, bzw. sein darf.

Die Erfindung hat es sich nun zur Aufgabe gestellt, diesen Nachteil zu beheben, und schlägt hiezu vor, daß innerhalb der Gehäusenabe ein die Drehzahl der Bremswelle abgreifender Teil einer Blockierschutzeinrichtung vorgesehen ist, der die Erregerspannung der Magnetspulen der Wirbelstrombremse steuert.

Durch die erfindungsgemäße Ausbildung einer eigenen Blockierschutzeinrichtung für die Bremswelle der Wirbelstrombremse wird nun nicht nur die Bremswelle und damit der komplette Antrieb gegen Blockieren geschützt, und damit der Bremsweg bei verringerter Bodenhaftung verkürzt, sondern die den einzelnen Rädern zugeordneten Blockierschutzeinrichtungen können ihre Aufgabe weiterhin erfüllen. Sie werden daher gerade in jenen Situationen, für die sie überhaupt vorgesehen sind, nicht in ihrer Funktion beeinträchtigt. Die für die Wirbelstrombremse vorgesehene Blockierschutzvorrichtung kann dabei insgesamt in bekannter Weise ausgeführt sein, d.h. es können prinzipiell alle bekannten, geeigneten Systeme Verwendung finden. Deren Steuerung erfolgt üblicherweise über eine Steuerelektronik, die die in Abhängigkeit von der Bodenhaftung auf die Räder ausübbaren maximalen Bremskräfte der hydraulischen oder pneumatischen Bremsanlage nicht überschreiten läßt. Bei der erfindungsgemäßen Wirbelstrombremse wird nun die Erregerspannung der Magnetspulen gesteuert, und dadurch die Stärke der Wirbelströme variiert, woraus sich die Größe der aufgebauten Magnetfelder und dadurch das Ausmaß der Rotorabbremsung einstellen.

Eine bevorzugte konstruktive Ausführung sieht dabei vor, daß auf der Bremswelle ein Zahnrad befestigt ist, dem ein in die Gehäusenabe eingesetzter induktiver Geber als drehzahlabgreifender Teil zugeordnet ist. Der Einbau in die Gehäusenabe ermöglicht die geschützte, abgekapselte Anordnung des Gebers und weiters auch die ausreichende Versorgung mit Schmiermitteln, die an dieser Stelle ohnedies für die Bremswellenlager vorhanden sind. Das räumliche Problem, das sich aus der Verwendung des Stirnzahnrades und der daraus bedingten Anordnung des induktiven Gebers ergeben kann,wird in bevorzugter Ausführung dadurch gelöst, daß der induktive Geber schräg zur Bremswelle in die Gehäusenabe eingesetzt ist, und die Zähne des Zahnrades senkrecht zur Einsetzrichtung abgeschrägt sind.

Auf diese Weise gelingt es den induktiven Geber aus der Gehäusenabe in einen Raum innerhalb des Magnetspulenraumes zu führen, der sich axial an den Magnetspulenträger anschließt, und der für den die Wärmeabfuhr bewirkenden Luftdurchtritt ohnedies notwendig ist.

Nachstehend wird nun die Erfindung anhand der Figuren der beiliegenden Zeichnungen näher beschrieben, ohne darauf beschränkt zu sein.

Es zeigen:

Fig.1 eine Ansicht einer zwischen Längsträgern eines Fahrzeuges montierten Wirbelstrombremse, und

Fig.2 einen Axialschnitt gemäß der Linie II-II von Fig.1.

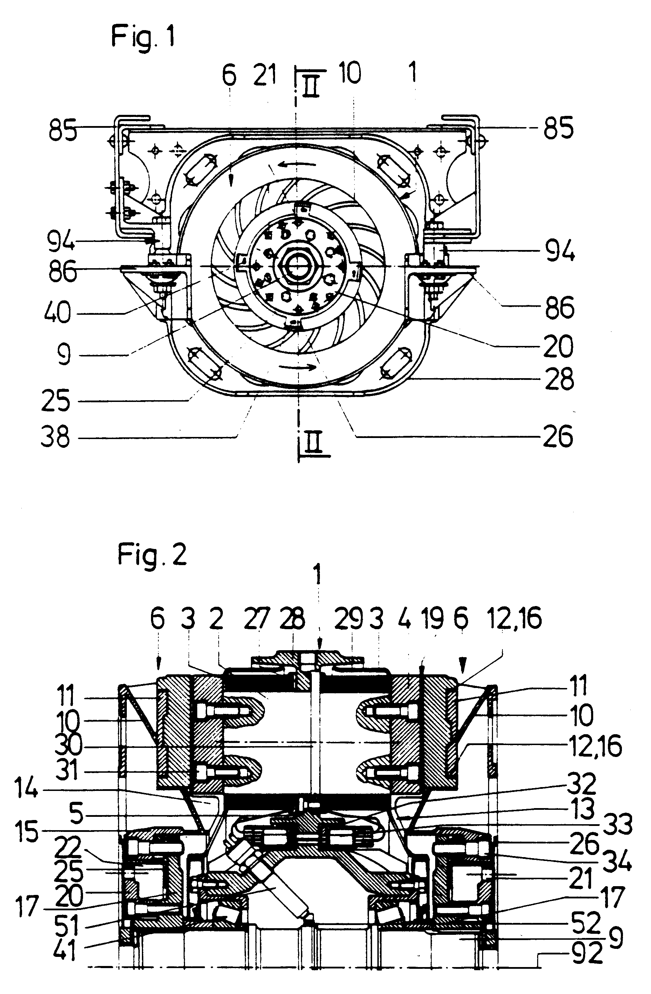

Eine zum Einbau in eine Kardanwelle vorgesehene Wirbelstrombremse weist ein Gehäuse 1 auf, das als Träger für die einzelnen Magnetspulen 3 dient. Das Gehäuse 1 besteht aus einer Leichtmetallegierung, insbesondere Aluminiumgußlegierung, und bildet im Inneren eine Gehäusenabe 5, in der ein als Bremswelle 9 mit der Achse 92 dienendes Wellenstück in Lagern 41 gelagert ist. Von der Gehäusenabe 5 erstreckt sich in einer Radialebene ein ringförmiger Steg 27, der einen Kranz von Öffnungen aufweist, und als äußerster Gehäuseabschnitt ist parallel zur Nabe ein im wesentlichen zylindrischer bzw. viereckiger Abdeckflansch 28 am ringförmigen Steg 27 angeformt. Der Abdeckflansch 28 ist an einander gegenüberliegenden Seiten mit Montageplatten versehen, die in der Einbaustellung sich vertikal erstrecken,und an denen Tragkonsolen 86 einstellbar fixiert sind. Die Tragkonsolen 86 sind mit Hilfe von Befestigungselementen 94 an Längsträgern 85 des Fahrzeugrahmens fixiert (Fig.1).

Wie aus Fig.2 ersichtlich, liegt das Gehäuse 1 symmetrisch in einer mittleren Radialebene der Wirbelstrombremse. Die Öffnungen im ringförmigen Steg 27 werden von Spulenkernen 2 durchsetzt, die eine Ringschulter 30 aufweisen, die entlang des Öffnungsrandes am Steg 27 anliegt. Die Ringschulter 30 des Spulenkernes 2 ist mit dem Steg 27 im Bereich seines Öffnungsrandes verschraubt. Beidseitig des Steges 27 ist auf die Spulenkerne 2 je eine Magnetspule 3 aufgeschoben und eine aus Kunststoff, beispielsweise PVC oder schwarz eloxiertem Alu-Blech gebildete Schutzhaube 29, die pro Kern 2 eine Öffnung aufweist, überdeckt die Stirnseite der Magnetspulen 3. Mittels Befestigungsschrauben 31 sind an den Kernen 2 stirnseitig Polschuhe 4 fixiert, die gleichzeitig die Schutzhaube 29 an den Magnetspulen 3 anliegend festhalten. Beim Übergang des Steges 27 des Gehäuses 1 zur Gehäusenabe 5 sind beidseitig Ringnuten 32 vorgesehen, in die elektrische Anschlußleitungen 33 mit Steckanschlüssen für die Magnetspulen eingelegt sind.

Das als Bremswelle 9 dienende Wellenstück ist beidseitig der Gehäusenabe 5 im Querschnitt unrund ausgebildet und trägt jeweils eine Rotornabe 17, an der eine Rotorscheibe 6 mittels Schrauben 34 befestigt ist. Jede Rotorscheibe 6 setzt sich aus zwei Teilen zusammen, von denen der unter Ausbildung eines Luftspaltes 19 an die Polschuhe 4 angenäherte Teil einen Ring und der zweite ein Lüfterrad mit lamellenartigen Speichen 10 darstellt. Der Ring ist aus einem magnetisch weichen Material möglichst hoher Permeabilität, möglichst geringer Remanenz und guter elektrischer Leitfähigkeit gefertigt, und besteht demzufolge vorzugsweise aus Reineisen, vor allem der Sorte RSE 80 1.1014. Aus diesem Material sind bevorzugt auch die Spulenkerne 2 gebildet. Der zweite Teil jeder Rotorscheibe 6, also das Lüfterrad, ist aus einem Material geringen Gewichts, guter Verarbeitbarkeit und hoher thermischer und mechanischer Beanspruchbarkeit hergestellt,und besteht vorzugsweise aus einer Aluminiumgußlegierung, beispielsweise der Sorte G-AlSi1OMgwa. Jedes Lüfterrad ist im wesentlichen doppelwandig ausgebildet, wobei die lamellenartiger Speichen 10 gekrümmt und schräg zwischen den beiden Wandungen verlaufen. Vorzugsweise beträgt deren Krümmungsradius 140 mm und die Schrägneigung 45˚. Die lamellenartigen Speichen 10 sind weiters immer mit in axialer Richtung sich in den Freiraum 13 innerhalb des Ringes und der Polschuhe 4 erstreckenden Fortsätzen 14 versehen. Die von den lamellenartigen Speichen 10 und den Wandungen eingeschlossenen Kanäle wälzen Kühlluft durch die Wirbelstrombremse und führen die entstehende Wärme nach außen ab. Die dem Ring zugewandte Wandung des Lüfterrades bildet einen axial vorstehenden Ringsteg 11, an dessen beiden achsparallelen Seitenflächen Außengewinde 16 vorgesehen sind. Die beiden Außengewinde 16 sind gegengleich, d.h. eines der beiden stellt ein Links- und das andere ein Rechtsgewinde dar, die in Umfangsrichtung an denselben Stellen beginnen und enden. Am Ring ist eine korrespondierende Nut ausgebildet, deren achsparallele Seitenflächen Innengewinde 12 tragen, die zu den jeweiligen Außengewinden 16 des Ringsteges 11 passen. Somit lassen sich die beiden Rotorteile jeder Rotorscheibe 6 miteinander verschrauben, wobei im Hinblick auf die Drehrichtung der Rotorscheiben 6 Links- und Rechtsgewinde so gewählt sind, daß eine selbsttätige Lockerung nicht möglich ist. Das Lüfterrad stellt im wesentlichen ebenfalls eine Ringscheibe dar, deren wellennächster Bereich innerhalb der Speichen 10 einen Montageringteil 15 bildet. Dieser dient zur Befestigung an der Rotornabe 17, die gegenüber dem Lüfterrad axial zur Gehäusenabe 5 hin versetzt im wesentlichen innerhalb des Ringes der Rotorscheibe 6 angeordnet ist. Dadurch entsteht innerhalb des ringförmigen Lüfterrades ein nach außen offener Ringraum , und ein Kranz von als Befestigungselementen dienenden Schrauben 34 verbindet den Montageringteil 15 des Lüfterrades mit dem Randbereich der Rotornabe 17. Dabei kann der axiale Abstand zwischen dem Montageringteil 15 und der Rotornabe 17 durch Stellschrauben festgelegt werden, die in einem zwischen den Montageringteil 15 und die Rotornabe 17 eingelegten Distanzring angeordnet sind. Die Einstellung dieses axialen Abstandes legt den Luftspalt 19 zwischen dem Ring und den Polschuhen 4 fest. Für die Wellenverbindung zwischen der Bremswelle 9 und den beidseitig anschließenden Abschnitten der Kardanwelle bzw. Antriebswelle ist jeweils ein Kupplungsflansch 20 vorgesehen,der einen hülsenartigen axialen Fortsatz aufweist. Der Kupplungsflansch 20 fluchtet dabei mit seiner Außenseite im wesentlichen mit der Außenseite des Lüfterrades der Rotorscheibe 6, erstreckt sich also in den axial offenen Ringraum innerhalb des Lüfterrades , wobei der hülsenartige Fortsatz an der Rotornabe 17 anliegt. An dieser ist der Kupplungsflansch 20 mittels achsparalleler Schrauben fixiert, sodaß über den Formschluß der Rotornabe 17 mit der Bremswelle 9 die verdrehfeste Verbindung der Rotorscheiben 6 mit der angekuppelten Kardan- bzw. Antriebswelle hergestellt ist. Auf Grund des hülsenartigen Fortsatzes verbleibt zwischen der Rotornabe 17 und dem Kupplungsflansch 20 von dem axial offenen Ringraum ein Zwischenraum 22, in dem ein axial verschiebbarer Topf 25 angeordnet ist. Der Durchmesser des Kupplungsflansches 20 ist kleiner als der Innendurchmesser des innerhalb des Lüfterrades gebildeten Ringraumes, und durch den zwischen dem Kupplungsflansch 20 und dem Lüfterrad verbleibenden Ringspalterstreckt sich die Wandung des Topfes 25 nach außen. An der Außenseite des Lüfterrades erstreckt sich ein Randbereich der Wandung in einer Radialebene, aus der hintergreifbare, periphere Fortsätze 26 abstehen.

Für die Wellenverbindung weist der Kupplungsflansch 20 einen Kranz von in denZwischenraum 22 führenden Bohrungen 21 auf (Fig.2). In diesen Bohrungen sind Schraubbolzen axial verschiebbar angeordnet, wobei deren Köpfe am Boden des Topfes 25 anliegen. Nachdem die Wirbelstrombremse in die Einbaulage gebracht worden ist, und durch Drehen der Rotorscheibe 6 die Übereinstimmung der Bohrungen 21 mit entsprechenden Bohrungen des anderen Kupplungsflansches an der Kardanwelle bzw. Antriebswelle hergestellt ist, wird der Topf 25 an den zugänglichen Fortsätzen 26 ergriffen, und in axialer Richtung nach außen gezogen. Dabei treten die Schraubbolzen durch den Kupplungsflansch der Kardan- oder Antriebswelle.

Sobald die Wellenverbindung hergestellt ist, kann der Topf 25 wieder in seine innere Position zurückgeschoben und dort fixiert werden. Hiezu dienen Schlitze 40 in den Fortsätzen 26 und Befestigungsschrauben 38, die im Montageringteil 15 des Lüfterrades vorgesehen sind. Wie aus Fig.1 ersichtlich, verlaufen die Schlitze 40 umfangsparallel und enden in einer Erweiterung, die den Durchtritt des Kopfes der Schraube 38 gestattet. Sobald die Köpfe der Schrauben 38 durch die Erweiterungen durchgetreten sind, wird der Topf 25 geringfügig verdreht, sodaß die Schäfte der Schrauben 38 in den schmäleren Teil der Schlitze 40 eintreten und anschließend werden die Schrauben 38 festgezogen.

Die Gehäusenabe 5, in der die beiden Bremswellenlager 41, insbesondere Kegelrollenlager, mit größtmöglicher axialer Distanz angeordnet sind, umschließt einen Hohlraum, der mit Getriebeöl zur Lagerschmierung teilgefüllt ist. Dieses kann über nicht gezeigte Kanäle im Gehäuse 1 zugeführt bzw. abgeführt werden. In der in der Einbaustellung unteren Hälfte der Gehäusenabe 5 ist ein Ölstandgeber eingesetzt. Weiters befindet sich in der Gehäusenabe 5 ein Teil einer Blockierschutzeinrichtung, der als induktiver Geber 51 schräg zur Bremswelle 9 in der Gehäusenabe 5 befestigt ist.

Der induktive Geber 51 tastet ein auf der Bremswelle 9 angeordnetes Stirnzahnrad 52 ab, und gibt die ermittelte Drehzahl an eine Steuerelektronik weiter, die die in Abhängigkeit von der Bodenhaftung auf die Kardanwelle ausübbare maximale Bremswirkung nicht überschreiten läßt. Die Steuerelektronik, die im wesentlichen jener von Blockierschutzeinrichtungen für die einzelnen Räder eines Kraftfahrzeuges entspricht, steuert im vorliegenden Fall die Erregerspannung der Magnetspulen 3, und damit die Größe des von den Magnetfeldern bewirkten Drehmomentes auf die Bremswelle 9 in Abhängigkeit von der verringerten Bodenhaftung der Räder.

## Patentansprüche

1. Wirbelstrombremse für Kraftfahrzeuge zum Einbau in die Antriebswelle,mit einem Gehäuse (1) als Träger peripher angeordneter Magnetspulen (3), mit einer in einer Gehäusenabe (5) gelagerten, und mit der Antriebswelle kuppelbaren Bremswelle (9), und mit einem auf der Bremswelle befestigten Rotor (6,17), wobei die Gehäusenabe zwei axial distanzierte Wellenlager (41) aufweist, dadurch gekennzeichnet, daß innerhalb der Gehäusenabe (5) ein die Drehzahl der Bremswelle (9) abgreifender Teil einer Blockierschutzeinrichtung vorgesehen ist, der die Erregerspannung der Magnetspulen (3) der Wirbelstrombremse steuert.

2. Wirbelstrombremse nach Anspruch 1, dadurch gekennzeichnet, daß auf der Bremswelle (9) ein Zahnrad (52) befestigt ist, dem ein in die Gehäusenabe (5) eingesetzter induktiver Geber (51) als drehzahlabgreifender Teil zugeordnet ist.

3. Wirbelstrombremse nach Anspruch 2, dadurch gekennzeichnet, daß der induktive Geber (51) schräg zur Bremswelle (9) in die Gehäusenabe (5) eingesetzt ist, und die Zähne des Zahnrades (52) senkrecht zur Einsetzrichtung abgeschrägt sind.

## Claims

1. An eddy current brake for motor vehicles for installation in the drive shaft, comprising a housing (1) as a carrier for peripherally arranged magnet coils (3), a brake shaft (9) which is mounted in a housing boss (5) and which can be coupled to the drive shaft, and a rotor (6, 17) which is fixed on the brake shaft, wherein the housing boss has two axially spaced shaft bearings (41), characterised in that provided within the housing boss (5) is a part of an anti-locking arrangement, which part picks up the speed of rotation of the brake shaft (9) and controls the excitation voltage of the magnet coils (3) of the eddy current brake.

2. An eddy current brake according to claim 1 characterised in that a gear (52) is fixed on the brake shaft (9) and an inductive sender (51) which is fitted into the housing boss (5) is associated as the part for picking up the speed of rotation with the gear (52).

3. An eddy current brake according to claim 2 characterised in that the inductive sender (51) is inserted into the housing boss (5) inclinedly relative to the brake shaft (9) and the teeth of the gear (52) are bevelled perpendicularly to the direction of insertion.

**Revendications**

1. Frein à courants de Foucault pour véhicules à moteur, destiné à être incorporé à l'arbre de transmission, avec un carter (1) en tant que support de bobines d'électro-aimants (3) disposées périphériquement, avec un arbre de freinage (9) tournant dans un moyeu (5) du carter et pouvant être accouplé à l'arbre de transmission, et avec un rotor (6, 17) fixé sur l'arbre de freinage, le moyeu du carter présentant deux paliers d'arbre (41) distancés axialement,

caractérisé en ce qu'il est prévu à l'intérieur du moyeu (5) du carter un élément d'un dispositif antiblocage mesurant la vitesse de rotation de l'arbre de freinage (9), qui commande la tension d'excitation des bobines d'électro-aimants (3) du frein à courants de Foucault.

2. Frein à courants de Foucault, selon la revendication 1, caractérisé en ce qu'une roue dentée (52) est calée sur l'arbre de freinage (9), à laquelle est associé un émetteur inductif (51) inséré dans le moyeu (5) du carter, en tant qu'élément mesurant la vitesse de rotation.

3. Frein à courants de Foucault selon la revendication 2, caractérisé en ce que l'émetteur inductif (51) est inséré dans le moyeu (5) du carter obliquement par rapport à l'arbre de freinage (9), et en ce que les dents de la roue dentée (52) sont chanfreinées perpendiculairement à la direction d'insertion.

## Fig. 1

## Fig. 2